# EUROPEAN PATENT SPECIFICATION

(11) **EP 2 860 813 B1**
(45) Date of publication and mention of the grant of the patent: **26.12.2018**
(21) Application number: 13793149.9
(22) Date of filing: 22.05.2013
(51) Int. Cl.: H01M 10/0583, H01M 10/0585, H01M 2/02

(54) **LITHIUM ION BATTERY**
LITHIUM-IONEN-BATTERIE
BATTERIE AU LITHIUM-ION

(30) Priority: 24.05.2012 JP 2012118640
(43) Date of publication of application: 15.04.2015
(73) Proprietor: Eliiy Power Co., Ltd., Shinagawa-ku, Tokyo 141-0032 (JP)
(72) Inventor: SATO, Michito, Tokyo 141-0032 (JP); SUGIYAMA, Hideyuki, Tokyo 141-0032 (JP)
(74) Representative: Zanoli, Enrico
(86) International application number: PCT/JP2013/064230
(87) International publication number: WO 2013/176183

(56) References cited:
- WO-A1-2008/114731
- GB-A- 717 543
- JP-A- 2002 184 364
- JP-A- 2003 223 872
- JP-A- 2009 167 259
- JP-A- 2010 231 946
- JP-A- 2012 092 209

## Description

### Technical Field

The present invention relates to a lithium-ion battery.

### Background Art

Lithium-ion batteries have attracted attention because of their high energy density and have been actively researched and developed. The lithium-ion batteries also have been pervasive for use in compact application such as laptop computers and cellular phones. With the advent of electric cars, smart homes, and others, large-size rechargeable batteries are desired by the market in recent years; therefore, research and development of the lithium-ion batteries with a large capacity have advanced.

Because of using an organic solvent as an electrolytic solution, the lithium-ion batteries may involve risk of ignition occurred through a breakdown of the batteries caused by stress while being transported. To avoid this risk, the United Nations and many countries enforce transportation regulations (such as the UN Recommendations on the Transport of Dangerous Goods) for the lithium-ion batteries and require various tests on the batteries such as whether the batteries are durable to transportation. To improve impact resistance and vibration resistance of the lithium-ion batteries, many researches are carried out (see, for example, Patent Document 1).

The large-size lithium-ion batteries have a structure such that a battery case generally made of a rigid material houses a power generation element and a non-aqueous electrolyte, the power generation element being connected to current collectors. Once the batteries are subjected to vibrations thereby vibrating the power generation element in the battery case, the batteries may have risks as follows: junctions between the power generation element and the current collectors break; and the current collectors break.

To improve the vibration resistance of the lithium-ion batteries, a shrink film may be used for covering and bundling the power generation element and the current collectors together in the battery case (see, for example, Patent Document 2). Since the shrink film is capable of bundling the power generation element and the current collectors together, the vibrations of the power generation element are suppressed while the batteries are subjected to the vibrations, with the result that the lithium-ion batteries improve in the vibration resistance.

The shrink film for covering and bundling the power generation element and the current collectors together is provided as follows: one sheet of a film wraps the power generation element and the current collectors; an overlapped portion of the film is adhered or fusion bonded; and the film is heated at temperatures higher than a shrinkage temperature for a few seconds to several tens of seconds so as to allow the entire film to be shrunken.

### Prior Art Documents

### Patent Documents

Patent Document 1: Japanese Unexamined Patent Application Publication No. 2011-216239
Patent Document 2: Japanese Unexamined Patent Application Publication No. 2010-23194 6
Patent Document 3: JP2003-223872
Patent Document 4:GB-A-717543

### Summary of the Invention

### Problems that the Invention is to Solve

The vibration resistance of the lithium-ion batteries provided with the conventional shrink film may decrease if the batteries are continuously subjected to vibrations for long periods of time.

The present invention is contrived in view of the above-described circumstances and is to provide a lithium-ion battery whose vibration resistance does not decrease even when the battery is continuously subjected to vibrations for long periods of time.

### Means of Solving the Problems

The present invention provides a lithium-ion battery characterized by comprising a power generation element having a structure where a positive electrode and a negative electrode are stacked with a separator interposed therebetween; a positive-electrode current collector connected to the positive electrode; a negative-electrode current collector connected to the negative electrode; a shrink tube bundling the power generation element, the positive-electrode current collector, and the negative-electrode current collector together; a non-aqueous electrolyte; and a battery case housing the power generation element, the positive-electrode current collector, the negative-electrode current collector, the shrink tube, and the non-aqueous electrolyte, wherein the positive-electrode current collector and the negative-electrode current collector are fixed to the battery case, and the shrink tube is a seamless tube.

### Effects of the Invention

The lithium-ion battery of the present invention comprises the power generation element having the structure where the positive electrode and the negative electrode are stacked and have the separator interposed therebetween; the positive-electrode current collector connected to the positive electrode; the negative-electrode current collector connected to the negative electrode; the non-aqueous electrolyte; and the battery case housing the power generation element, the positive-electrode current collector, the negative-electrode current collector, and the non-aqueous electrolyte; therefore, the power generation element can be charged and discharged through the positive-electrode current collector and the negative-electrode current collector.

The lithium-ion battery of the present invention also comprises the shrink tube bundling the power generation element, the positive-electrode current collector, and the negative-electrode current collector together; and the positive-electrode current collector and the negative-electrode current collector are fixed to the battery case; therefore, the power generation element, the positive-electrode current collector, and the negative-electrode current collector can be fixed to the battery case in a bundle, with the result that upon applying vibrations to the battery, vibrations of the power generation element are suppressed; and the lithium-ion battery improves in vibration resistance.

The shrink tube of the present invention is a seamless tube and does not have a seam joint; therefore, the shrink tube is prevented from being split even if the battery is continuously subjected to vibrations for long periods of time; and the shrink tube is capable of improving the vibration resistance of the lithium-ion battery. This effect was proved by a vibration test carried out by the inventors of the present invention.

### Brief Description of the Drawings

Fig. 1 illustrates a top view of a diagrammatic illustration of a lithium-ion battery exemplifying an embodiment of the present invention.
Fig. 2 illustrates a side view of a diagrammatic illustration of a lithium-ion battery exemplifying an embodiment of the present invention.
Fig. 3 illustrates a cross-section view of a diagrammatic illustration of the lithium-ion battery taken along the dotted line A-A of Fig.1.
Fig. 4 illustrates cross-section views of diagrammatic illustrations of a positive-electrode current collector and of a negative-electrode current collector included in a lithium-ion battery exemplifying an embodiment of the present invention.
Fig. 5 illustrates a cross-section view of a diagrammatic illustration of the lithium-ion battery taken along the dotted line B-B of Fig. 2.
Fig. 6 illustrates a cross-section view of a diagrammatic illustration of the lithium-ion battery taken along the dashed-dotted line C-C of Fig. 2.
Fig. 7 illustrates an explanatory drawing of a structure of a power generation element included in a lithium-ion battery exemplifying an embodiment of the present invention.
Fig. 8(a) illustrates a plan view of a diagrammatic illustration of a positive electrode included in a lithium-ion battery exemplifying an embodiment of the present invention, and Fig. 8(b) illustrates a cross-section view of a diagrammatic illustration of the positive electrode taken along the dotted line D-D of Fig. 8(a).
Fig. 9(a) illustrates a plan view of a diagrammatic illustration of a negative electrode included in a lithium-ion battery exemplifying an embodiment of the present invention, and Fig. 9(b) illustrates a cross-section view of a diagrammatic illustration of the negative electrode taken along the dotted line E-E of Fig. 9(a).
Fig. 10 illustrates drawings roughly explaining a part of a production method of a lithium-ion battery exemplifying an embodiment of the present invention.

### Mode for Carrying Out the Invention

A lithium-ion battery of the present invention is characterized by comprising a power generation element having a structure where a positive electrode and a negative electrode are stacked with a separator interposed therebetween; a positive-electrode current collector connected to the positive electrode; a negative-electrode current collector connected to the negative electrode; a shrink tube bundling the power generation element, the positive-electrode current collector, and the negative-electrode current collector together; a non-aqueous electrolyte; and a battery case housing the power generation element, the positive-electrode current collector, the negative-electrode current collector, the shrink tube, and the non-aqueous electrolyte, wherein the positive-electrode current collector and the negative-electrode current collector are fixed to the battery case; and the shrink tube is a seamless tube.

It is desirable for the lithium-ion battery of the present invention that the positive-electrode current collector and the negative-electrode current collector are disposed in such a way as to interpose the power generation element therebetween and that the shrink tube encompasses the positive-electrode current collector, the negative-electrode current collector, and the power generation element.

This structure enables the shrink tube to bundle the positive-electrode current collector, the negative-electrode current collector, and the power generation element together and improves vibration resistance of the lithium-ion battery.

It is desirable for the lithium-ion battery of the present invention that the shrink tube is attached closely to the power generation element, the positive-electrode current collector, and the negative-electrode current collector.

This structure enables the shrink tube to bundle the positive-electrode current collector, the negative-electrode current collector, and the power generation element together and improves the vibration resistance of the lithium-ion battery.

It is desirable for the lithium-ion battery of the present invention that the shrink tube is made of a film ranging from 30 µm or more to 200 µm or less in thickness.

This structure suppresses splitting of the shrink tube caused by vibrations of the lithium-ion battery.

In the lithium-ion battery of the present invention, the battery case comprises: a case having an opening; and a lid member for closing the opening; and it is desirable that the positive-electrode current collector and the negative-electrode current collector are fixed to the lid member.

This structure enables the power generation element to connect to the positive-electrode current collector and to the negative-electrode current collector, both of the current collectors being fixed to the lid member, and enables the current collectors and the power generation element to be bundled together with the resin film, with the result that production costs can be reduced.

In the lithium-ion battery of the present invention, it is desirable that the shrink tube is thermally shrunken to bundle the positive-electrode current collector, the negative-electrode current collector, and the power generation element together.

This structure is capable of increasing closeness between the power generation element and the current collectors by shrinking the shrink tube, with the result that the shrink tube is capable of suppressing effects on junctions between the power generation element and the current collectors caused by vibrations applied to the lithium-ion battery. Moreover, the seamless shrink tube eliminates stress caused by a difference in shrinking percentage between a fusion bonding part and a non-fusing part; therefore, the seamless shrink tube does not have a problem such as splitting at a seam joint. This improves a yield as well.

In the following, one embodiment of the present invention will be explained through the use of drawings. Note that the following explanations are exemplifications and are not to limit the present invention only to the drawings and the following explanations.

### Structure of a lithium-ion battery

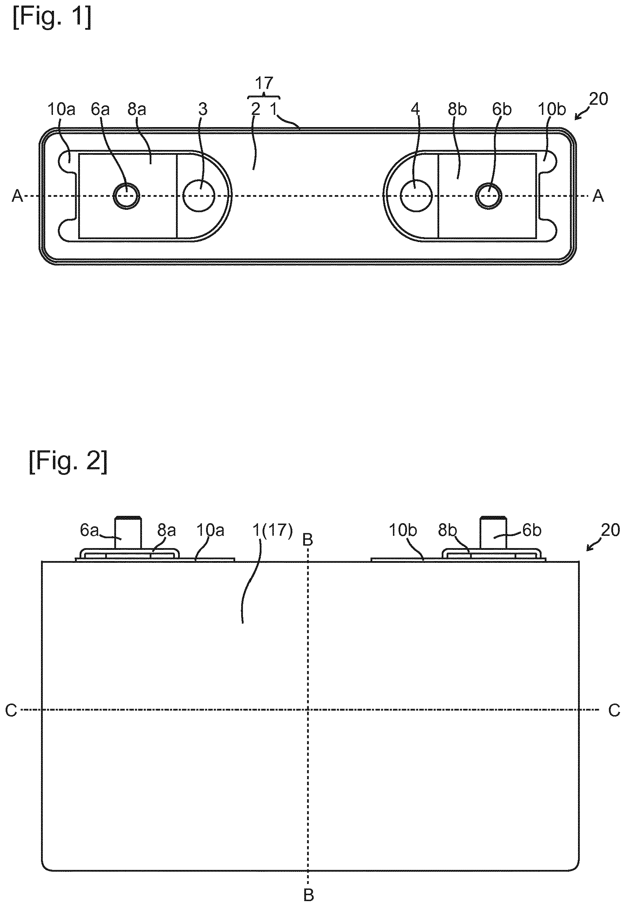

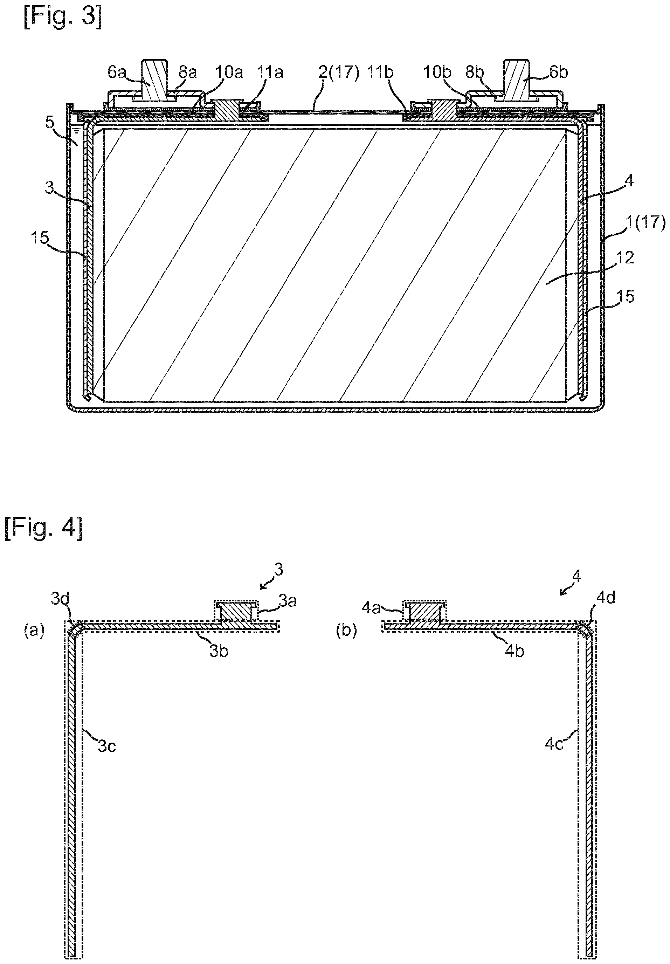

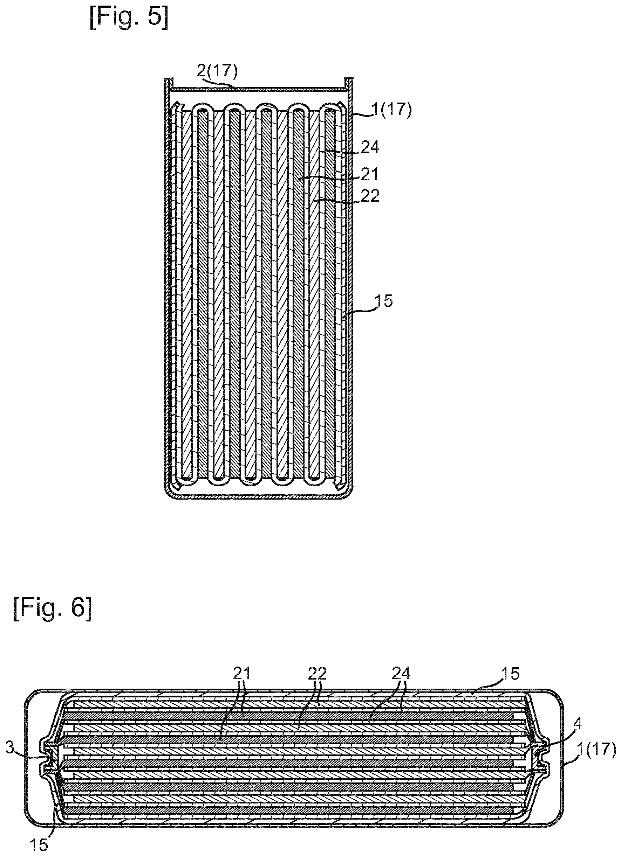

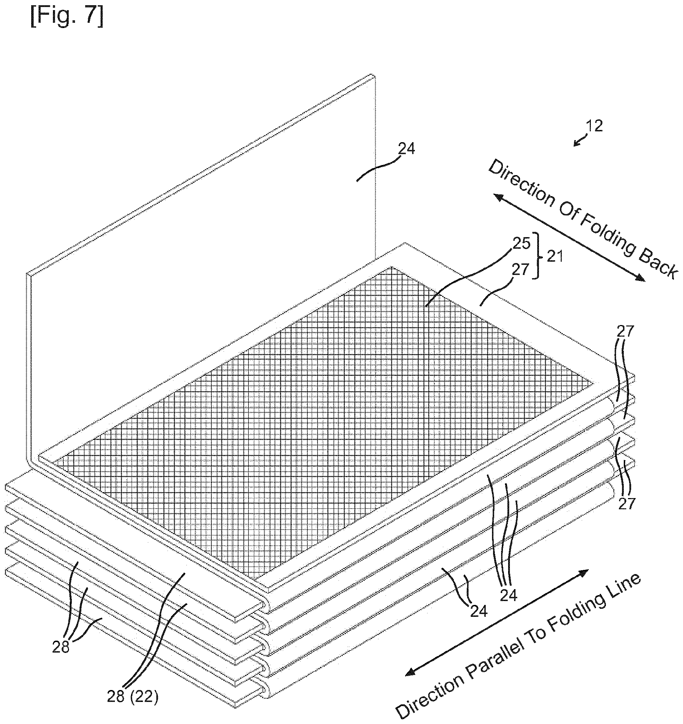

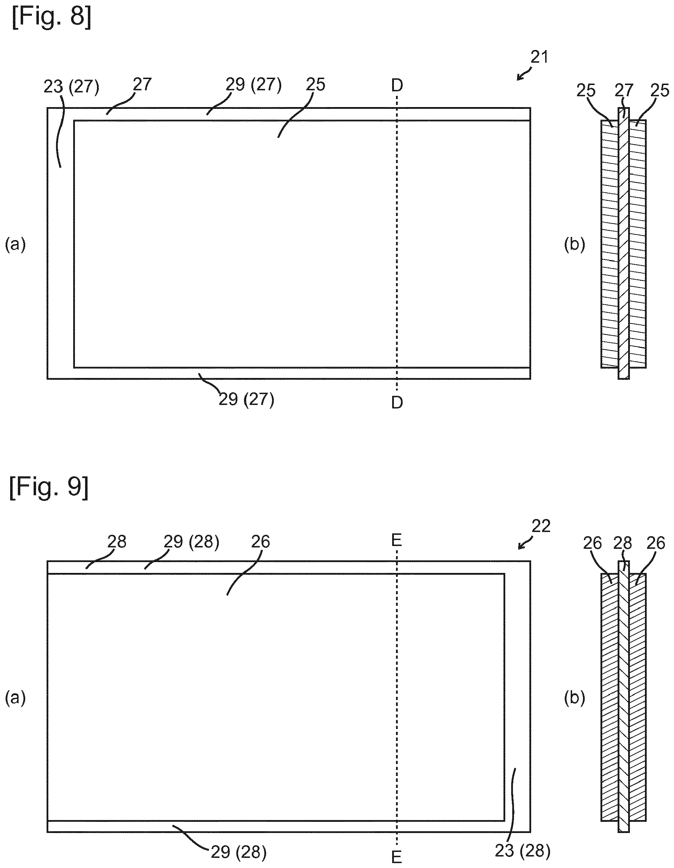

Fig. 1 illustrates a top view of a diagrammatic illustration indicating a structure of a lithium-ion battery of the present embodiment; and Fig. 2 illustrates a side view of a diagrammatic illustration indicating a structure of the lithium-ion battery of the present embodiment. Fig. 3 illustrates a cross-section view of a diagrammatic illustration of the lithium-ion battery taken along the dotted line A-A of Fig. 1. Fig. 4(a) illustrates a cross-section view of a diagrammatic illustration of a positive-electrode current collector included in the lithium-ion battery of the present embodiment; and Fig. 4(b) illustrates a cross-section view of a diagrammatic illustration of a negative-electrode current collector included in the lithium-ion battery of the present embodiment. Fig. 5 illustrates a cross-section view of a diagrammatic illustration of the lithium-ion battery taken along the dotted line B-B of Fig. 2; and Fig. 6 illustrates a cross-section view of a diagrammatic illustration of the lithium-ion battery taken along the dashed-dotted line C-C of Fig. 2. Fig. 7 illustrates an explanatory drawing of a power generation element included in the lithium-ion battery of the present embodiment. Fig. 8(a) illustrates a plan view of a diagrammatic illustration of a positive electrode included in the lithium-ion battery of the present embodiment; and Fig. 8(b) illustrates a cross-section view of a diagrammatic illustration of the positive electrode taken along the dotted line D-D of Fig. 8(a). Fig. 9(a) illustrates a plan view of a diagrammatic illustration of a negative electrode included in the lithium-ion battery of the present embodiment; and Fig. 9(b) illustrates a cross-section view of a diagrammatic illustration of the negative electrode taken along the dotted line E-E of Fig. 9(a).

A lithium-ion battery 20 of the present embodiment is characterized by comprising a power generation element 12 having a structure where a positive electrode 21 and a negative electrode 22 are stacked with a separator 24 interposed therebetween; a positive-electrode current collector 3 connected to the positive electrode 21; a negative-electrode current collector 4 connected to the negative electrode 22; a shrink tube 15 bundling the power generation element 12, the positive-electrode current collector 3, and the negative-electrode current collector 4 together; a non-aqueous electrolyte 5; and a battery case 17 housing the power generation element 12, the positive-electrode current collector 3, the negative-electrode current collector 4, the shrink tube 15, and the non-aqueous electrolyte 5, wherein the positive-electrode current collector 3 and the negative-electrode current collector 4 are fixed to the battery case 17; and the shrink tube 15 is a seamless tube.

In the following, the lithium-ion battery 20 of the present embodiment will be explained.

### 1. Battery case, positive-electrode current collector, and negative-electrode current collector

The battery case 17 comprises a case 1 for housing the power generation element 12. The battery case 17 may also comprise a lid member 2.

The case 1 is capable of housing the power generation element 12, the positive-electrode current collector 3, the negative-electrode current collector 4, and the non-aqueous electrolyte 5 and of being joined to the lid member 2.

A material for the case 1 is not particularly limited as long as it is a material that is not greatly deformed even when the case 1 houses the power generation element 12, the positive-electrode current collector 3, the negative-electrode current collector 4, and the non-aqueous electrolyte 5; and used as the material for the case 1 is, for example, a metal material such as aluminum, an aluminum alloy, iron, an iron alloy, or stainless steel; a metal material plated with nickel, tin, chromium, zinc, or the like; or a rigid plastic.

The case 1 may have a rectangular shape or a cylindrical shape.

The case 1 has an opening for inserting the power generation element 12 into the case 1. This opening is closed by the lid member 2. The case 1, therefore, is capable of housing the power generation element 12.

The lid member 2 closes the opening for inserting the power generation element 12 into the case 1. The lid member 2 is also joined to the case 1 by, for example, laser welding, resistance welding, ultrasonic welding, or an adhesive, so as to seal the case 1.

The positive-electrode current collector 3 and the negative-electrode current collector 4 are fixed to the lid member 2 while the positive electrode 21 and the negative electrode 22 are fixed to the positive-electrode current collector 3 and the negative-electrode current collector 4, respectively, so that the power generation element 12 is fixed to the lid member 2 together with the positive-electrode current collector 3, the negative-electrode current collector 4, external insulating members 10a and 10b, and internal insulating members 11a and 11b (see Fig. 3). This integration enables the case 1 to house the power generation element 12, the positive-electrode current collector 3, and the negative-electrode current collector 4 and enables the lid member 2 to close the opening simultaneously.

The lid member 2 is capable of fixing external connection terminals 8a and 8b, the external connection terminal 8a electrically connecting to the positive-electrode current collector 3; and the external connection terminal 8b electrically connecting to the negative-electrode current collector 4. The lithium-ion battery 20 can, therefore, be charged and discharged through the external connection terminals 8a and 8b.

Materials for the positive-electrode current collector 3 and for the negative-electrode current collector 4 are not particularly limited; however, the positive-electrode current collector 3 may be made of, for example, aluminum; and the negative-electrode current collector 4 may be made of, for example, copper.

A method of producing the positive-electrode current collector 3 and the negative-electrode current collector 4 is not particularly limited; however, these current collectors may be produced, for example, by pressing a metal plate.

The positive-electrode current collector 3 comprises, for example, a projection portion 3a penetrating through the opening provided on the lid member 2 so as to be connected to the external connection terminal 8a; a foot portion 3c having a connecting portion to be connected to the positive electrode 21; and a base portion 3b of the current collector to connect the projection portion 3a to the foot portion 3c.

The negative-electrode current collector 4 comprises, for example, a projection portion 4a penetrating through the opening provided on the lid member 2 so as to be connected to the external connection terminal 8b; a foot portion 4c having a connecting portion to be connected to the negative electrode 22; and a base portion 4b of the current collector to connect the projection portion 4a to the foot portion 4c.

Since the projection portions 3a and 4a of the current collectors penetrate through the opening provided on the lid member 2 so as to be connected to the external connection terminals 8a and 8b, the positive-electrode current collector 3 and the negative-electrode current collector 4 are fixed to the lid member 2 together with the external insulating members 10a and 10b and the internal insulating members 11a and 11b so that the external connection terminals 8a and 8b are electrically connected to the current collectors 3 and 4. The drawing exemplifies that the positive-electrode current collector 3 comprises only one foot portion 3c and that the negative-electrode current collector 4 comprises only one foot portion 4c; however, the current collectors may comprise two or more foot portions; and the foot portions may have any width as long as the width of the foot portions falls within a range fitting into the case.

Since the foot portion 3c of the positive-electrode current collector 3 is connected to the positive electrode 21 while the foot portion 4c of the negative-electrode current collector 4 is connected to the negative electrode 22, the positive electrode 21 is electrically connected to the external connection terminal 8a through the positive-electrode current collector 3 while the negative electrode 22 is electrically connected to the external connection terminal 8b through the negative-electrode current collector 4. This enables the lithium-ion battery 20 to charge and discharge via the external connection terminals 8.

Moreover, since the power generation element 12 having the positive electrode 21 and the negative electrode 22 is fixed to the positive-electrode current collector 3 and the negative-electrode current collector 4, the power generation element 12 is fixed to the lid member 2 together with the positive-electrode current collector 3 and the negative-electrode current collector 4.

The foot portions 3c and 4c of the current collectors may have a U-shaped structure, and each of the outer sides of the opposed metal plates may be joined to the positive electrode 21 or the negative electrode 22.

The positive-electrode current collector 3 may be disposed at one end of the power generation element 12, and the negative-electrode current collector 4 may be disposed at another end of the power generation element 12. This reduces amplitude of vibration of the power generation element 12 even when the battery is subjected to vibrations.

### 2. Power generation element and non-aqueous electrolyte

The power generation element 12 brings about a battery reaction with the non-aqueous electrolyte 5 filled in the battery case 17. This battery reaction allows the lithium-ion battery 20 to be charged and discharged. The power generation element 12 comprises: the positive electrodes 21; the negative electrodes 22; and the separator 24, the separator is disposed between the positive electrode 21 and the negative electrode 22. As illustrated in Figs. 5 to 7, the power generation element 12 may comprise, for example, the separator 24 being folded in zigzag; the positive electrodes 21; and the negative electrodes 22. The positive electrodes 21 and the negative electrodes 22 are separately disposed in valley folds of the separator 24, and each of the positive electrodes 21 and each of the negative electrodes 22 are disposed alternately with the separator interposed therebetween. Besides the above-described structure, the power generation element may have a winding type structure comprising the commonly used separator 24, the separator being disposed between the positive electrode 21 and the negative electrode 22; and the positive electrodes 21 and the negative electrodes 22 being disposed alternately and being wound; or a stack-type structure comprising the separators 24, each of the separators being disposed between the positive electrode 21 and the negative electrode 22; and the positive electrodes 21 and the negative electrodes 22 being disposed alternately and being stacked.

The separator 24 is in the form of a sheet and is disposed between the positive electrode 21 and the negative electrode 22. The separator 24 is capable of preventing a short-circuit current from flowing between the positive electrode 21 and the negative electrode 22; and the separator is not particularly limited as long as it is a separator capable of allowing electrolytes to pass therethrough; however, an example of the separator is a microporous film made of polyolefin.

The positive electrode 21 comprises a positive-electrode current collector sheet 27 and a positive-electrode active material layer 25 provided on each side of the positive-electrode current collector sheet 27. The positive electrode 21 may be formed as illustrated in Fig. 8(a) and Fig. 8(b)-the rectangular positive-electrode current collector sheet 27 is provided on its both sides with the positive-electrode active material layer 25. The positive electrode 21 may have a connection portion 23 to be connected to the positive-electrode current collector 3, and the connection portion 23 illustrated in Fig. 8(a) may be formed in such a way that the positive-electrode current collector sheet 27 of the positive electrode 21 is not provided at its one end on the both sides with the positive-electrode active material layer 25. In this drawing, the positive electrode has an uncoated portion 29 (a portion where the current collector sheet 27 is visible) that is not coated with the positive-electrode active material layer, the uncoated portion being different from the connection portion to be connected to the current collector and being disposed at both ends extending in a width direction (parallel to the dotted line D-D) of the positive electrode 21; however, the positive electrode may not be provided with this uncoated portion 29. Moreover, the positive-electrode current collector sheet 27 may be provided at its one end with, for example, a convex lug portion projecting from this end; and the positive-electrode active material layer 25 is not formed on the lug portion so that the lug portion functions as the connection portion.

The positive-electrode current collector sheet 27 is not particularly limited as long as it has electric conductivity, and the positive-electrode active material layer 25 is provided on its surface; however, an example of the positive-electrode current collector sheet is a metal foil. Preferably used as the positive-electrode current collector sheet is an aluminum foil.

The positive-electrode active material layer 25 is formed on the positive-electrode current collector sheet 27 by a coating method, etc. with use of a positive-electrode active material to which a conducting agent, a binding agent, etc. are added. Used as the positive-electrode active material are, for example, lithium-transition metal composite oxides capable of reversibly extracting and/or inserting lithium ions-LiCoO₂, LiNiO₂, LiNiₓCo₁₋ₓO₂ (x = 0.01 to 0.99), LiMnO₂, LiMn₂O₄, LiCoₓMn_{y}Ni_{z}O₂ (x + y + z = 1), and olivine-type LiFePO₄ and LiₓFe_{1-y}M_{y}PO₄ (wherein 0.05 ≤ x ≤ 1.2 and 0 ≤ y ≤ 0.8; and M is at least one of Mn, Cr, Co, Cu, Ni, V, Mo, Ti, Zn, Al, Ga, Mg, B, and Nb)-and these lithium-transition metal composite oxides may be used singly or as a mixture of two or more.

The negative electrode 22 comprises a negative-electrode current collector sheet 28 and a negative-electrode active material layer 26 provided on each side of the negative-electrode current collector sheet 28. The negative electrode 22 may be formed as illustrated in Fig. 9(a) and Fig. 9(b)-the rectangular negative-electrode current collector sheet 28 is provided on its both sides with the negative-electrode active material layer 26. The negative electrode 22 may have a connection portion 23 to be connected to the negative-electrode current collector 4, and the connection portion 23 illustrated in Fig. 9(a) may be formed in such a way that the negative-electrode current collector sheet 28 of the negative electrode 22 is not provided at its one end on the both sides with the negative-electrode active material layer 26. Moreover, the negative-electrode current collector sheet 28 may be provided at its one end with a lug portion in a similar manner to the positive electrode 21 described above; and the negative-electrode active material layer 26 is not formed on the lug portion so that the lug portion functions as the connection portion. The negative electrode may not be provided with an uncoated portion 29 (a portion where the current collector sheet 28 is visible), in a similar manner to the positive electrode 21 described above, the uncoated portion being disposed at both ends extending in a width direction of the negative electrode.

The negative-electrode current collector sheet 28 is not particularly limited as long as it has electric conductivity, and the negative-electrode active material layer 26 is provided on its surface; however, an example of the negative-electrode current collector sheet is a metal foil. Preferably used as the negative-electrode current collector sheet is a copper foil.

The negative-electrode active material layer 26 is formed on the negative-electrode current collector sheet 28 by a coating method, etc. with use of a negative-electrode active material to which a conducting agent, a binding agent, etc. are added. Used as the negative-electrode active material is, for example, graphite, partially graphitized carbon, LiTiO₄, or an Sn alloy; and these materials may be used singly or as a mixture of two or more.

Used as the non-aqueous electrolytic solution is carbonates, lactones, ethers, esters, or the like to be used as a solvent; and these solutions may be used as a mixture of two or more. Among these solutions, a mixture of a cyclic carbonate and a linear carbonate is particularly preferable. The non-aqueous electrolytic solution is made by dissolving a lithium salt solute as an electrolyte-LiCF₃SO₃, LiAsF₆, LiClO₄, LiBF₄, LiPF₆, LiBOB, LiN(CF₃SO₂)₂, LiN(C₂F₅SO₂), or the like-in an organic solvent. The non-aqueous electrolytic solution may be mixed with, as required, one or more types of additives such as VC (vinylene carbonate), PS (propane sultone), VEC (vinyl ethylene carbonate), PRS (propene sultone), and a flame retardant.

### 3. Shrink tube

The shrink tube 15 is made of a tube-shaped resin film and bundles the power generation element 12, the positive-electrode current collector 3, and the negative-electrode current collector 4 together by thermal shrinkage. The shrink tube 15 also covers the power generation element 12, the positive-electrode current collector 3, and the negative-electrode current collector 4. Moreover, the shrink tube 15 is a seamless tube and thereby does not have a seam joint. The seamless tube may be produced, for example, by forming a resin film on an outer surface of a metal mold as a core body and by separating the resin film from the metal mold. The shrink tube 15 is capable of suppressing bulges or displacement of the power generation element 12 and of preventing the positive electrodes and the negative electrodes of the power generation element 12 to be separated from each other. Especially in the case where the power generation element 12 is a stack structure, the shrink tube 15 functions as a component for fixing the positive electrodes 21 and the negative electrodes 22 or as a member for maintaining a shape of the power generation element 12.

The shrink tube 15 is capable of encompassing the positive-electrode current collector 3, the negative-electrode current collector 4, and the power generation element 12. This enables the shrink tube 15 to bundle the positive-electrode current collector 3, the negative-electrode current collector 4, and the power generation element 12 together and to suppress individual vibrations of the positive-electrode current collector 3, the negative-electrode current collector 4, and the power generation element 12 even when the battery is subjected to vibrations.

The shrink tube 15 is also capable of being attached closely to the power generation element 12, the positive-electrode current collector 3, and the negative-electrode current collector 4. This enables the shrink tube to bundle the positive-electrode current collector 3, the negative-electrode current collector 4, and the power generation element 12 together; therefore, the shrink tube improves vibration resistance of the battery.

A material for the film constituting the shrink tube 15 is a thermally shrinkable resin such as polyethylene, polypropylene, polyolefin, polyvinyl chloride (PVC), polyethylene terephthalate (PET), or a fluorinated resin (such as FEP or PTFE). The thermally shrunken tube 15 is capable of increasing closeness of the encompassed positive-electrode current collector 3, negative-electrode current collector 4, and power generation element 12 by bundling the positive-electrode current collector 3, the negative-electrode current collector 4, and the power generation element 12 together, with the result that the thermally shrunken tube is capable of suppressing effects on junctions between the power generation element 12 and the current collectors caused by vibrations applied to the lithium-ion battery. Moreover, the seamless shrink tube 15 eliminates stress caused by a difference in shrinking percentage between a fusion bonding part and a non-fusing part; therefore, the seamless shrink tube 15 does not have a problem such as splitting at a seam joint. This improves a yield as well. A thin elastic rubber in the form of a cylinder may be used for bundling the positive-electrode current collector 3, the negative-electrode current collector 4, and the power generation element 12 together; however, the shrink tube 15 is preferable in order to stably tighten the encompassed positive-electrode current collector 3, negative-electrode current collector 4, and power generation element 12 in a balanced manner.

The film constituting the shrink tube 15 may be 30 µm or more to 200 µm or less in thickness. The shrink tube 15 having the thickness of 30 µm or more is capable of sufficient strength and of preventing the shrink tube 15 from splitting even when the battery is subjected to vibrations. The shrink tube 15 having the thickness of 200 µm or less is capable of shortening the time of being thermally shrunken or is capable of keeping temperatures low to be thermally shrunken, so as to suppress effects of heat on the power generation element 12 during the thermal shrinkage.

The film constituting the shrink tube 15 is preferably 50 µm or more to 150 µm or less in thickness. This enables the shrink tube to have sufficient strength and lowers the effects on the power generation element during the thermal shrinkage.

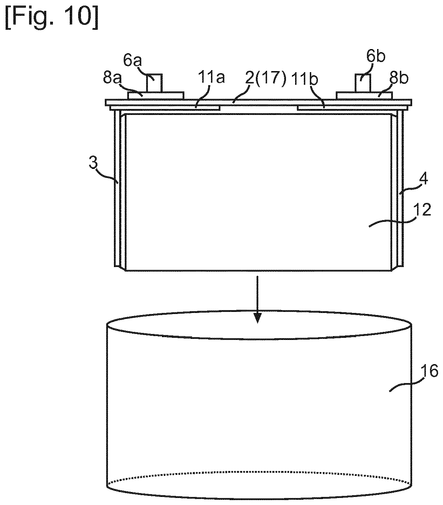

Fig. 10 illustrates explanatory drawings of how the shrink tube 15 is provided to the battery. As illustrated in Fig. 10, the shrink tube 15 is in the form of a seamless tube made of a resin film and is provided to the battery in such a way that the power generation element 12, the positive-electrode current collector 3, and the negative-electrode current collector 4 are inserted inside a resin tube 16 and then that the resin tube 16 is heated at temperatures higher than a shrinkage temperature for a few seconds to several tens of seconds so as to allow the shrink tube to be shrunken. The tube 15 provided as above encompasses and bundles the power generation element 12, the positive-electrode current collector 3, and the negative-electrode current collector 4 together. The positive-electrode current collector 3 and the negative-electrode current collector 4 are fixed to the battery case 17; therefore, the bundled power generation element 12, positive-electrode current collector 3, and negative-electrode current collector 4 are fixed to the battery case 17. This prevents the power generation element 12, the positive-electrode current collector 3, and the negative-electrode current collector 4 to vibrate even when the lithium-ion battery 20 is subjected to vibrations and the battery to break down.

If the shrink tube 15, for example, does not bundle the power generation element 12, the positive-electrode current collector 3, and the negative-electrode current collector 4 together, vibrations applied to the battery vibrate the positive-electrode current collector 3 and the negative-electrode current collector 4 individually and worsen amplitudes of vibrations of the positive-electrode current collector 3 and of the negative-electrode current collector 4, resulting in metal fatigue of bases 3d and 4d of foot portions of the current collectors. The vibrations could also cause the positive-electrode current collector 3 and the negative-electrode current collector 4 to collide with the case 1, resulting in damage to the current collectors. Furthermore, the vibrations could cause the positive electrodes 21, the negative electrodes 22, and the separators 24 to be displaced, all of which constitute the power generation element 12; and this displacement could cause the positive electrodes 21 and the negative electrodes 22 to be forced out of the separators or could cause the separators to be partially damaged, resulting in a short-circuit current flowing between the positive electrodes 21 and the negative electrodes 22.

The shrink tube 15 is capable of suppressing such damages to the battery.

Because the shrink tube 15 is seamless, the shrink tube does not have the following problems even when the battery is subjected to vibrations: the power generation element 12, the positive-electrode current collector 3, and the negative-electrode current collector 4 are vibrated, causing stress on the shrink tube 15; and the shrink tube splits at a seam joint resulting that the power generation element 12, the positive-electrode current collector 3, and the negative-electrode current collector 4 fall apart from each other.

A conventional shrink film has a seam joint formed by fusion bonding or adhesion, and the seam joint undergoes stress caused by a difference in shrinking percentage during thermal shrinkage; therefore, the seam joint has strength smaller than that of other parts of the shrink film. In the case where the battery is subjected to vibrations, and the shrink film is subjected to the stress, the shrink film is likely to split at the seam area where is weak in strength. Once the shrink film splits, the power generation element 12, the positive-electrode current collector 3, and the negative-electrode current collector 4 are separated from each other and thereby are vibrated individually, with the result that the battery is easily damaged.

The seamless shrink tube 15 does not have a part where is weaker in strength than other parts; therefore, the shrink tube does not have a problem such as splitting at a specific part undergoing stress. This prevents the shrink tube 15 from splitting and the battery from lowering its vibration resistance even if the battery is continuously subjected to the vibrations for long periods of time.

### Vibration test

Five each for 5 different types of lithium-ion batteries-as illustrated in Figs. 1 to 5-were prepared, the 5 types having different aspects of a shrink tube, respectively (Examples 1 to 5), and were subjected to a vibration test. Also, five each for 3 different types of lithium-ion batteries-as illustrated in Figs. 1 to 5-were prepared, the 3 types comprising a shrink film instead of a shrink tube (Comparative Examples 1 to 3), and were subjected to the vibration test.

A material used for the shrink tube and the shrink film was polyethylene. A length of foot portions (where are to be connected to a power generation element) of a positive-electrode current collector and of a negative-electrode current collector was designed to be 8 cm.

### 1. Test method of the vibration test

The prepared lithium-ion batteries were fixed firmly to a platform (a vibration table) of a vibrating device, and the vibration test for the lithium-ion batteries was carried out by vibrating the platform in sine-wave vibrations. In the vibration test, a vibration test cycle was carried out twelve times in three directions each-an X direction, a Y direction, and a Z direction-of the batteries. In the vibration test cycle, the batteries were vibrated while the frequencies are changed 7 Hz → 200 Hz → 7 Hz in a logarithmic sweep manner for 15 minutes. Namely, the batteries were vibrated for 3 hours in each direction.

During the vibration test cycle, a peak acceleration was maintained at 1 G at the frequencies from 7 Hz to 18 Hz; an amplitude of vibration was maintained at 0.8 mm (total amplitude was 1.6 mm) at the frequencies from 18 Hz to 50 Hz; and an acceleration was increased until a peak acceleration reached 8 G. The peak acceleration of 8 G was maintained at the frequencies from 50 Hz to 200 Hz.

### 2. Comparative Example 1

In Comparative Example 1, lithium-ion batteries were prepared that were provided with a single-layer shrink film; and these lithium-ion batteries were subjected to the vibration test. This shrink film was made of polyethylene and was 50 µm in thickness; and a power generation element, a positive-electrode current collector, and a negative-electrode current collector were wrapped with the shrink film in a single-layer form; then an overlapped portion was thermally fusion bonded; and then this polyethylene film was thermally shrunken.

All the batteries with this structure were disassembled after the vibration test, and the following were found: the shrink film of all the tested batteries split at a seam area where the film was overlapped and fusion bonded; and foot portions of the current collectors were broken at their bases. A reason why the bases of the foot portions of the current collectors were broken was thought that although the shrink film suppressed the vibrations at the foot portions of the current collectors before the shrink film split, the foot portions of the current collectors were greatly vibrated after the shrink film split, causing great stress on the bases of the foot portions of the current collectors.

### 3. Comparative Example 2

In Comparative Example 2, lithium-ion batteries were prepared that were provided with a double-layer shrink film; and these lithium-ion batteries were subjected to the vibration test. These shrink films each were made of polyethylene and were 50 µm in thickness to wrap in the following order: a power generation element, a positive-electrode current collector, and a negative-electrode current collector were wrapped with a first shrink film in a single-layer form; an overlapped portion was thermally fusion bonded; the power generation element, the positive-electrode current collector, and the negative-electrode current collector were wrapped with a second shrink film in a single-layer form over the first shrink film; an overlapped portion of the second shrink film was thermally fusion bonded; and these polyethylene films were thermally shrunken.

All the batteries with this structure were disassembled after the vibration test, and the following were found: the both shrink films of all the tested batteries split at seam areas where the both shrink films were overlapped and fusion bonded; and foot portions of the current collectors of the four batteries were broken at their bases.

### 4. Comparative Example 3

In Comparative Example 3, lithium-ion batteries were prepared that were provided with a single-layer shrink film made of polyethylene and being 100 µm in thickness; and these lithium-ion batteries were subjected to the vibration test. This shrink film was made of polyethylene and was 100 µm in thickness; and a power generation element, a positive-electrode current collector, and a negative-electrode current collector were wrapped with the shrink film in a single-layer form; then an overlapped portion was thermally fusion bonded; and then this polyethylene film was thermally shrunken.

All the batteries with this structure were disassembled after the vibration test, and the following were found: the shrink film of all the tested batteries split at a seam area where the film was overlapped and fusion bonded; and foot portions of the current collectors were cracked at their bases.

### 5. Example 1

In Example 1, lithium-ion batteries were prepared that were provided with a seamless polyethylene tube made of a polyethylene film and being 30 µm in thickness such that a power generation element, a positive-electrode current collector, and a negative-electrode current collector were inserted into the polyethylene tube; and then the polyethylene tube was thermally shrunken so that these lithium-ion batteries were subjected to the vibration test.

All the batteries with this structure were disassembled after the vibration test, and the following was found: the shrink tube of the two batteries slightly split near an upper portion of the current collectors only in a length of about 2 mm. None of bases of foot portions of the current collectors was broken or cracked.

### 6. Example 2

In Example 2, lithium-ion batteries were prepared that were provided with a seamless polyethylene tube made of a polyethylene film and being 50 µm in thickness such that a power generation element, a positive-electrode current collector, and a negative-electrode current collector were inserted into the polyethylene tube; and then the polyethylene tube was thermally shrunken so that these lithium-ion batteries were subjected to the vibration test.

All the batteries with this structure were disassembled after the vibration test, and the following was found: the shrink tube of all the tested batteries did not split. Also, none of bases of foot portions of the current collectors was broken or cracked.

### 7. Example 3

In Example 3, lithium-ion batteries were prepared that were provided with a seamless polyethylene tube made of a polyethylene film and being 100 µm in thickness such that a power generation element, a positive-electrode current collector, and a negative-electrode current collector were inserted into the polyethylene tube; and then the polyethylene tube was thermally shrunken so that these lithium-ion batteries were subjected to the vibration test.

All the batteries with this structure were disassembled after the vibration test, and the following was found: the shrink tube of all the tested batteries did not split. Also, none of bases of foot portions of the current collectors was broken or cracked.

### 8. Example 4

In Example 4, lithium-ion batteries were prepared that were provided with a seamless polyethylene tube made of a polyethylene film and being 150 µm in thickness such that a power generation element, a positive-electrode current collector, and a negative-electrode current collector were inserted into the polyethylene tube; and then the polyethylene tube was thermally shrunken so that these lithium-ion batteries were subjected to the vibration test.

All the batteries with this structure were disassembled after the vibration test, and the following was found: the shrink tube of all the tested batteries did not split. Also, none of bases of foot portions of the current collectors was broken or cracked.

### 9. Example 5

In Example 5, lithium-ion batteries were prepared that were provided with a seamless polyethylene tube made of a polyethylene film and being 200 µm in thickness such that a power generation element, a positive-electrode current collector, and a negative-electrode current collector were inserted into the polyethylene tube; and then the polyethylene tube was thermally shrunken so that these lithium-ion batteries were subjected to the vibration test.

All the batteries with this structure were disassembled after the vibration test, and the following was found: the shrink tube of all the tested batteries did not split. Also, none of bases of foot portions of the current collectors was broken or cracked.

### [Explanation of Reference Numerals]

1: case; 2: lid member; 3: positive-electrode current collector; 4: negative-electrode current collector; 3a, 4a: projection portion; 3b, 4b: current collector base portion; 3c, 4c: current collector foot portion; 3d, 4d: base of the current collector foot portion; 5: non-aqueous electrolyte; 6a, 6b: screw member; 8a, 8b: external connection terminal; 10a, 10b: external insulating member; 11a, 11b: internal insulating member; 12: power generation element; 15: shrink tube; 16: resin tube; 17: battery case; 20: lithium-ion battery; 21: positive electrode; 22: negative electrode; 23: connection portion; 24: separator; 25: positive-electrode active material layer; 26: negative-electrode active material layer; 27: positive-electrode current collector sheet; 28: negative-electrode current collector sheet; 29: active material uncoated portion

## Claims

1. A lithium-ion battery (20) comprising:
a power generation element (12) having a structure where a positive electrode (21) and a negative electrode (22) are stacked with a separator (24) interposed therebetween;
a positive-electrode current collector (3) connected to the positive electrode (21);
a negative-electrode current collector (4) connected to the negative electrode (22);
a shrink tube (15) bundling the power generation element (12), the positive-electrode current collector (3), and the negative-electrode current collector (4) together;
a non-aqueous electrolyte (5); and
a battery case (17) housing the power generation element (12), the positive-electrode current collector (3), the negative-electrode current collector (4), the shrink tube (15), and the non-aqueous electrolyte (5), wherein
the positive-electrode current collector (3) and the negative-electrode current collector (4) are fixed to the battery case (17), and
the shrink tube (15) is a seamless tube.

2. The lithium-ion battery (20) according to Claim 1, wherein
the positive-electrode current collector (3) is disposed at one edge of the power generation element (12) and the negative-electrode current collector (4) is disposed at another edge of the power generation element (12), and
the shrink tube (15) encompasses the positive-electrode current collector (3), the negative-electrode current collector (4), and the power generation element (12).

3. The lithium-ion battery (20) according to Claim 1 or 2, wherein the shrink tube (15) is attached closely to the power generation element (12), the positive-electrode current collector (3), and the negative-electrode current collector (4).

4. The lithium-ion battery (20) according to any one of Claims 1 to 3, wherein the shrink tube (15) is made of a film ranging from 30 µm or more to 200 µm or less in thickness.

5. The lithium-ion battery (20) according to any one of Claims 1 to 4, wherein
the battery case (17) comprises a case (1) having an opening, and a lid member (2) for closing the opening, and
the positive-electrode current collector (3) and the negative-electrode current collector (4) are fixed to the lid member (2).

6. The lithium-ion battery (20) according to any one of Claims 1 to 5, wherein the shrink tube (15) is thermally shrunken to bundle the positive-electrode current collector (3), the negative-electrode current collector (4), and the power generation element (12) together.

7. The lithium-ion battery (20) according to any one of Claims 1 to 6, wherein
the power generation element (12) comprises the separator (24) being folded in zigzag; and
the positive electrode (21) and the negative electrode (22) are separately disposed in valley folds of the separator (24), the positive electrode (21) and the negative electrode (22) being disposed alternately with the separator (24) interposed therebetween.

## Patentansprüche

1. Lithium-Ionen-Batterie (20), umfassend:
ein Stromerzeugungselement (12) mit einer Struktur, bei der eine positive Elektrode (21) und eine negative Elektrode (22) mit einem zwischen ihnen liegenden Separator (24) gestapelt sind;
einen Positive-Elektrode-Stromabnehmer (3), der mit der positiven Elektrode (21) verbunden ist;
einen Negative-Elektrode-Stromabnehmer (4), der mit der negativen Elektrode (22) verbunden ist;
einen Schrumpfschlauch (15), der das Stromerzeugungselement (12), den Positive-Elektrode-Stromabnehmer (3) und den Negative-Elektrode-Stromabnehmer (4) zusammenbündelt;
einen nichtwässrigen Elektrolyten (5); und
ein Batteriegehäuse (17), das das Stromerzeugungselement (12), den Positive-Elektrode-Stromabnehmer (3), den Negative-Elektrode-Stromabnehmer (4), den Schrumpfschlauch (15) und den nichtwässrigen Elektrolyten (5) aufnimmt, wobei der Positive-Elektrode-Stromabnehmer (3) und der Negative-Elektrode-Stromabnehmer (4) an dem Batteriegehäuse (17) befestigt sind, und
der Schrumpfschlauch (15) ein nahtloser Schlauch ist.

2. Lithium-Ionen-Batterie (20) nach Anspruch 1, wobei
der Positive-Elektrode-Stromabnehmer (3) an einem Rand des Stromerzeugungselements (12) angeordnet ist und der Negative-Elektrode-Stromabnehmer (4) an einem anderen Rand des Stromerzeugungselements (12) angeordnet ist, und
der Schrumpfschlauch (15) den Positive-Elektrode-Stromabnehmer (3), den Negative-Elektrode-Stromabnehmer (4) und das Stromerzeugungselement (12) umgibt.

3. Lithium-Ionen-Batterie (20) nach Anspruch 1 oder 2, wobei der Schrumpfschlauch (15) fest an dem Stromerzeugungselement (12), dem Positive-Elektrode-Stromabnehmer (3) und dem Negative-Elektrode-Stromabnehmer (4) angebracht ist.

4. Lithium-Ionen-Batterie (20) nach einem der Ansprüche 1 bis 3, wobei der Schrumpfschlauch (15) aus einer Folie besteht, deren Dicke im Bereich von 30 µm oder mehr bis 200 µm oder weniger liegt.

5. Lithium-Ionen-Batterie (20) nach einem der Ansprüche 1 bis 4, wobei
das Batteriegehäuse (17) ein Gehäuse (1) mit einer Öffnung und ein Deckelelement (2) zum Schließen der Öffnung umfasst, und
der Positive-Elektrode-Stromabnehmer (3) und der Negative-Elektrode-Stromabnehmer (4) an dem Deckelelement (2) befestigt sind.

6. Lithium-Ionen-Batterie (20) nach einem der Ansprüche 1 bis 5, wobei der Schrumpfschlauch (15) thermisch geschrumpft wird, um den Positive-Elektrode-Stromabnehmer (3), den Negative-Elektrode-Stromabnehmer (4) und das Stromerzeugungselement (12) zusammenzubündeln.

7. Lithium-Ionen-Batterie (20) nach einem der Ansprüche 1 bis 6, wobei
das Stromerzeugungselement (12) den Separator (24), der im Zickzack gefaltet ist, umfasst; und
die positive Elektrode (21) und die negative Elektrode (22) separat in Talfalten des Separators (24) angeordnet sind, wobei die positive Elektrode (21) und die negative Elektrode (22) abwechselnd mit dem Separator (24) zwischen ihnen liegend angeordnet sind.

## Revendications

1. Batterie aux ions lithium (20) comprenant :
un élément de production d'énergie (12) ayant une structure dans laquelle une électrode positive (21) et une électrode négative (22) sont empilées avec un séparateur (24) interposé entre elles ;
un collecteur de courant d'électrode positive (3) relié à l'électrode positive (21) ;
un collecteur de courant d'électrode négative (4) relié à l'électrode négative (22) ;
un tube rétrécissable (15) regroupant l'élément de production d'énergie (12), le collecteur de courant d'électrode positive (3) et le collecteur de courant d'électrode négative (4) ;
un électrolyte non aqueux (5) ; et
un boîtier de batterie (17) contenant l'élément de production d'énergie (12), le collecteur de courant d'électrode positive (3), le collecteur de courant d'électrode négative (4), le tube rétrécissable (15) et l'électrolyte non aqueux (5),
dans laquelle
le collecteur de courant d'électrode positive (3) et le collecteur de courant d'électrode négative (4) sont fixés au boîtier de batterie (17), et
le tube rétrécissable (15) est un tube sans soudure.

2. Batterie aux ions lithium (20) selon la revendication 1, dans laquelle
le collecteur de courant d'électrode positive (3) est disposé sur un bord de l'élément de production d'énergie (12) et le collecteur de courant d'électrode négative (4) est disposé sur un autre bord de l'élément de production d'énergie (12), et
le tube rétrécissable (15) englobe le collecteur de courant d'électrode positive (3), le collecteur de courant d'électrode négative (4) et l'élément de production d'énergie (12).

3. Batterie aux ions lithium (20) selon la revendication 1 ou 2, dans laquelle le tube rétrécissable (15) est attaché étroitement à l'élément de production d'énergie (12), au collecteur de courant d'électrode positive (3) et au collecteur de courant d'électrode négative (4).

4. Batterie aux ions lithium (20) selon l'une quelconque des revendications 1 à 3, dans laquelle le tube rétrécissable (15) est constitué d'un film d'une épaisseur allante de 30 µm ou plus à 200 µm ou moins.

5. Batterie aux ions lithium (20) selon l'une quelconque des revendications 1 à 4, dans laquelle
le boîtier de batterie (17) comprend un boîtier (1) comportant une ouverture et un élément formant couvercle (2) pour fermer l'ouverture, et
le collecteur de courant d'électrode positive (3) et le collecteur de courant d'électrode négative (4) sont fixés sur l'élément formant couvercle (2).

6. Batterie aux ions lithium (20) selon l'une quelconque des revendications 1 à 5, dans laquelle le tube rétrécissable (15) est thermiquement rétréci pour regrouper ensemble le collecteur de courant d'électrode positive (3), le collecteur de courant d'électrode négative (4) et l'élément de production d'énergie (12).

7. Batterie aux ions lithium (20) selon l'une quelconque des revendications 1 à 6, dans laquelle
l'élément de production d'énergie (12) comprend le séparateur (24) plié en zigzag ; et l'électrode positive (21) et l'électrode négative (22) sont disposées séparément dans des plis en creux du séparateur (24), l'électrode positive (21) et l'électrode négative (22) étant disposées en alternance avec le séparateur (24) interposé entre elles.
